# EUROPÄISCHE PATENTSCHRIFT

(11) **EP 4 363 244 B1**
(45) Veröffentlichungstag und Bekanntmachung des Hinweises auf die Patenterteilung: **27.08.2025**
(21) Anmeldenummer: 22741692.2
(22) Anmeldetag: 23.06.2022
(51) Int. Cl.: B60C 11/11, B60C 11/12

(54) **FAHRZEUGLUFTREIFEN**
PNEUMATIC VEHICLE TYRE
PNEUMATIQUE DE VÉHICULE

(30) Priorität: 01.07.2021 DE 102021206933
(43) Veröffentlichungstag der Anmeldung: 08.05.2024
(73) Patentinhaber: Continental Reifen Deutschland GmbH, 30175 Hannover (DE)
(72) Erfinder: BAUER, Claudia, 30165 Hannover (DE); HEINHAUPT, Torsten, 30165 Hannover (DE); PANG-JIAN-XIANG, Edwin, 30165 Hannover (DE)
(74) Vertreter: Continental Corporation
(86) Internationale Anmeldenummer: PCT/DE2022/200140
(87) Internationale Veröffentlichungsnummer: WO 2023/274469

(56) Entgegenhaltungen:
- WO-A1-2019/048092
- DE-A1- 102005 030 566
- DE-A1- 102018 220 704
- JP-A- 2012 040 894
- JP-A- 2013 023 023
- US-A1- 2005 167 022
- US-A1- 2006 169 377
- US-A1- 2010 078 107

## Beschreibung

Die Erfindung betrifft einen Fahrzeugluftreifen mit einem Laufstreifen mit Profilblöcken mit jeweils einer Blockaußenfläche und zumindest einem in Draufsicht unter einem Winkel von 0° bis zu 50° zur axialen Richtung verlaufenden, den jeweiligen Profilblock durchquerenden und in Profilblocksegmente gliedernden Einschnitt mit einer Breite von 0,4 mm bis 1,2 mm, zwei Einschnittwänden und einer zu den Einschnittwänden übereinstimmend beabstandeten Einschnittmittelfläche, wobei der durchquerende Einschnitt zumindest in einem in Draufsicht über einen Teil des Einschnittes verlaufenden Einschnittbereich auf die maximale Tiefe ausgeführt ist, welcher eine von der Blockaußenfläche beabstandete Ausbauchung aufweist, welche, im entsprechenden Querschnitt senkrecht zur Einschnittmittelfläche betrachtet, zwischen einer auf die Einschnittmittelfläche bezogenen, in einer in radialer Richtung ermittelten konstanten ersten Tiefe durch die radial äußerste Stelle der Ausbauchung verlaufenden, radial äußeren Begrenzungslinie und einer auf die Einschnittmittelfläche bezogenen, in einer in radialer Richtung ermittelten konstanten zweiten Tiefe durch die radial innerste Stelle der Ausbauchung verlaufenden, radial inneren Begrenzungslinie ausgebildet ist,
wobei in Profilblocksegmenten der Profilblöcke jeweils zumindest ein in Draufsicht langgestreckter Zusatzeinschnitt mit einer Breite von 0,3 mm bis 1,0 mm und einer maximalen Tiefe ausgebildet ist, welcher mit dem durchquerenden Einschnitt von 90° um bis zu 60° abweichende Supplementwinkel einschließt und im Bereich radial außerhalb der Ausbauchung des durchquerenden Einschnittes einen Einschnittendabschnitt aufweist, wobei die Stelle der maximalen Tiefe des Zusatzeinschnittes radial innerhalb des Niveaus der radial äußeren Begrenzungslinie der Ausbauchung liegt.

Ein derartiger Fahrzeugluftreifen ist beispielsweise aus der US 2010/0078107 A1 bekannt. Dieser Fahrzeugluftreifen weist gemäß einem Ausführungsbeispiel einen Laufstreifen mit drei mittleren Profilblockreihen mit Profilblöcken mit in Draufsicht zumindest im Wesentlichen in axialer Richtung verlaufenden, den jeweiligen Profilblock durchquerenden Einschnitten mit einer Breite von höchstens 1,0 mm auf. Jeder Einschnitt weist eine von der Blockaußenfläche beabstandete Ausbauchung auf, welche, im Querschnitt senkrecht zur Einschnittmittelfläche betrachtet, zwischen einer radial äußeren Begrenzungslinie und einer radial inneren Begrenzungslinie ausgebildet ist. In jedem Profilblocksegment ist jeweils ein in Draufsicht langgestreckter Zusatzeinschnitt mit einer Breite von höchstens 1,0 mm und einer mit der maximalen Tiefe der Einschnitte übereinstimmenden maximalen Tiefe vorhanden, wobei der Zusatzeinschnitt mit dem bzw. den durchquerenden Einschnitt(en) Supplementwinkel von zirka 90° einschließt sowie in den bzw. die durchquerenden Einschnitt(e) einmündet und daher im Bereich radial außerhalb der Ausbauchung einen Einschnittendabschnitt aufweist. Dieser Fahrzeugluftreifen soll unter Aufrechterhaltung eines gleichmäßigen Laufstreifenabriebs eine gute Traktions-, Brems- und Handlingperformance aufweisen.

Aus der JP 2013 023 023 A ist ein Fahrzeugluftreifen mit einem Laufstreifen mit Profilblöcken mit durchquerenden, in radialer Richtung gewellt verlaufenden Einschnitten bekannt. Die Profilblöcke sind ferner mit von ihren Blockaußenflächen ausgehenden Zusatzeinschnitten versehen, welche lediglich oberflächlich ausgebildet und daher üblicherweise als "Mikrorillen" oder "Carvings" bekannt sind. Die Zusatzeinschnitte verlaufen, in Draufsicht betrachtet, unter einem Winkel von 30° bis 60° zur axialen Richtung und nehmen beim Fahren auf Eis den sich bildenden Schmelzwasserfilm auf. Dieser Reifen soll unter Aufrechterhaltung einer hohen Blocksteifigkeit gute Eisgriffeigenschaften aufweisen.

Die US 2006 169 377 A1 offenbart einen Fahrzeugluftreifen mit einem Laufstreifen mit Profilblöcken, welche mit Einschnitten versehen sind, die, sowohl in Draufsicht betrachtet als auch in radialer Richtung, zickzackförmig verlaufen, sodass die entsprechenden Zickzackwellen einander überlagert sind. Die Profilblöcke sind ferner mit von der Blockaußenfläche ausgehenden Zusatzeinschnitten versehen, welche lediglich oberflächlich ausgebildet sind und eine Tiefe von 0,1 mm bis 1,0 mm aufweisen. Bei Profilblöcken mit solchen Einschnitten und Zusatzeinschnitten soll weiterhin eine hohe Blocksteifigkeit gegeben sein.

Aus der WO 2019 048 092 A1 ist ferner ein Fahrzeugluftreifen mit einem laufrichtungsgebunden gestalteten Laufstreifen mit Profilblöcken bekannt, welche jeweils mit zumindest zwei Einschnitten versehen sind, die in Draufsicht zur axialen Richtung unter einem Winkel von 0° bis 45° verlaufen, eine Breite von 0,4 mm bis 1,0 mm und eine maximale Tiefe von 70% bis 100% der Profiltiefe aufweisen. Die Einschnitte weisen, im Querschnitt betrachtet, jeweils einen eine Ausbauchung bildenden, bogenförmig verlaufenden mittleren Einschnittabschnitt auf, welcher vom einlaufenden Blockrandbereich weg weist, wobei die Ausbauchungen der zwei Einschnitte eine unterschiedliche maximale Auslenkung aufweisen und wobei die maximale Auslenkung der Ausbauchung des am nächsten zum einlaufenden Blockrandbereich befindlichen Einschnittes größer ist als die maximale Auslenkung der Ausbauchung des am nächsten zum auslaufenden Blockrandbereich befindlichen Einschnittes. Diese Einschnitte bewirken ein vorteilhaftes Kippverhalten der Profilblöcke, wodurch eine hohe Nettokontaktfläche erhalten bleibt, was für die Griffeigenschaften günstig ist und ein gleichmäßiges Abreiben der Profilblöcke ermöglicht.

In Profilblöcken von Laufstreifen ausgebildete Einschnitte sind für die Griffeigenschaften, insbesondere unter winterlichen Fahrbedingungen sowie auf nasser Fahrbahn, von grundlegender Bedeutung. Die Verbesserung der Griffeigenschaften wird insbesondere durch längere Griffkanten, welche die Einschnitte zur Verfügung stellen, erreicht. Für gute Griffeigenschaften ist es somit wünschenswert, eine große Anzahl von Einschnitten in den Profilblöcken auszubilden. Dabei ist jedoch darauf zu achten, dass die Profilblöcke nicht "zu weich" werden, da sich andernfalls die jeweiligen Griffkanten unter Bremsbelastung durch die ausgeprägte Kippbewegung der Profilblöcke "Einrollen", was die Wirksamkeit der Griffkanten verringert.

Um diesen Effekt entgegenzuwirken, ist es bekannt, Einschnitte mit Ausbauchungen im Einschnittinneren vorzusehen. Durch die Ausbauchungen wird die Bewegungsfreiheit der durch die Einschnitte gebildeten Profilblocksegmente eingeschränkt, was vor allem bei Profilblöcken mit vielen Einschnitten, wie sie üblicherweise in Laufstreifen von Winterreifen vorzufinden sind, günstig ist. Die eingeschränkte Bewegungsfreiheit hat zur Folge, dass sich die Profilblocksegmente unter Belastung weniger stark verformen, wodurch die Einschnitt- und Blockkanten ihre Wirkung als Griffkanten besser entfalten können und somit insbesondere die Schneegriffeigenschaften verbessert sind.

Der Erfindung liegt die Aufgabe zugrunde, bei einem Fahrzeugluftreifen der eingangs genannten Art die Griffeigenschaften unter Aufrechterhaltung guter Fahreigenschaften auf trockener Fahrbahn weiter zu verbessern.

Gelöst wird die gestellte Aufgabe erfindungsgemäß dadurch, dass der durchquerende Einschnitt eine maximale Tiefe von 70% bis 100% der Profiltiefe aufweist, wobei die Stelle der maximalen Tiefe des Zusatzeinschnittes radial außerhalb des Niveaus der radial inneren Begrenzungslinie der Ausbauchung des durchquerenden Einschnittes liegt.

Die Zusatzeinschnitte stellen weitere Griffkanten zur Verfügung, wodurch die Griffeigenschaften auf nasser und verschneiter Fahrbahn verbessert sind. Ihre spezielle Orientierung zum durchquerenden Einschnitt hat mehrere vorteilhafte Effekte zur Folge. Die durch die Zusatzeinschnitte zur Verfügung gestellten Griffkanten weisen eine deutlich andere Orientierung als die Einschnittkanten der durchquerenden Einschnitte auf, wodurch eine multidirektionale Griffstruktur auf der Blockaußenfläche geschaffen ist, die die Griffeigenschaften deutlich verbessert. Ferner "unterteilen" die Zusatzeinschnitte die Blocksegmente in kleine "Segmentbereiche", wodurch sich die Blocksegmente besonders gut an mit Eis bedeckte Fahrbahnen anschmiegen, was zu einer vorteilhaft großen Nettokontaktfläche auf Eis und damit zu guten Eisgriffeigenschaften führt. Außerdem nehmen die Zusatzeinschnitte beim Fahren auf Eis sich bildendes Schmelzwasser auf. Da die Zusatzeinschnitte die Blocksteifigkeit - einerseits bedingt durch ihre Orientierung sowie anderseits durch die vorhandenen Ausbauchungen in den durchquerenden Einschnitten - insgesamt kaum merkbar und wenn auf gleichmäßige Weise beeinflussen, bleibt ein besonders vorteilhaftes Kippverhalten der Profilblöcke erhalten, was vor allem für die Kraftübertragung, insbesondere auf trockener Fahrbahn, vorteilhaft ist. Die getroffenen Maßnahmen ermöglichen somit verbesserte Griffeigenschaften auf mit Eis und mit Schnee bedeckter Fahrbahn sowie auf nasser Fahrbahn unter gleichzeitiger Aufrechterhaltung guter Fahreigenschaften auf trockener Fahrbahn.

Die Zusatzeinschnitte beeinflussen die Blocksteifigkeit nahezu kaum, was zur Aufrechterhaltung guter Fahreigenschaften auf trockener Fahrbahn beiträgt.

Bevorzugter Weise beträgt die maximale Tiefe des Zusatzeinschnittes 1,5 mm bis 3,0 mm. Solche Zusatzeinschnitte ermöglichen insbesondere unter Aufrechterhaltung einer hohen Blocksteifigkeit eine vorteilhafte Schmelzwasseraufnahme, liefern in dieser Hinsicht somit einen günstigen Kompromiss.

Eine weitere bevorzugte Ausführung ist dadurch gekennzeichnet, dass die radial äußere Begrenzungslinie der Ausbauchung des durchquerenden Einschnittes zur Blockaußenfläche in radialer Richtung einen Abstand von 1,0 mm bis 2,9 mm, insbesondere von mindestens 1,2 mm, aufweist. Eine in einem derart definierten Abstand zur Blockaußenfläche ausgebildete Ausbauchung ist für die Wirkungsweise der Ausbauchung und damit für die Wirkung der Einschnitt- und Blockkanten als Griffkanten von Vorteil.

Gemäß einer weiteren bevorzugten Ausführung weist die Ausbauchung des durchquerenden Einschnittes eine in einer radialer Richtung ermittelten konstanten Tiefe verlaufende Symmetrieebene auf, wobei die Stelle der maximalen Tiefe des Zusatzeinschnittes radial außerhalb der Symmetrieebene liegt und wobei die konstante Tiefe, in welcher die Symmetrieebene verläuft, vorzugsweise 0,5 mm bis 1,5 mm größer ist als die maximale Tiefe des Zusatzeinschnittes. Der Zusatzeinschnitt endet somit in der radial äußeren Hälfte der Ausbauchung. Dies trägt ebenfalls zur Aufrechterhaltung einer hohen Blocksteifigkeit bei und ist insbesondere bei Laufstreifen günstig, die aus einem weichen Gummimaterial bestehen. Solche Laufstreifen haben sich nämlich bei Winterreifen als durchaus vorteilhaft erwiesen.

Gemäß einer weiteren bevorzugten Ausführung verläuft der Zusatzeinschnitt in Draufsicht gerade. Dies ermöglicht eine besonders gleichmäßige Einflussnahme auf die Steifigkeit der Profilblocksegmente.

Eine weitere bevorzugte Ausführung sieht vor, dass der Zusatzeinschnitt in den durchquerenden Einschnitt einmündet oder vor diesem in einem in Draufsicht in Verlängerung der Einschnittmittellinie ermittelten Abstand von 0,1 mm bis 0,3 mm endet. Einmündende Zusatzeinschnitte sind für die Entwässerung des Profilblockes vorteilhaft, weil sich bildendes Schmelzwasser von den Zusatzeinschnitten in den entsprechenden durchquerenden Einschnitt weitergeleitet wird. Endende Zusatzeinschnitte verringern die Steifigkeit in geringem Ausmaß und sind insbesondere bei aus einem weichen Gummimaterial gefertigten Laufstreifen günstig.

Bevorzugter Weise weist der durchquerende Einschnitt einen zwischen der Ausbauchung und der Blockaußenfläche in radialer Richtung verlaufenden, radial äußeren Einschnittabschnitt mit einer auf die Einschnittmittelfläche bezogenen in radialer Richtung ermittelten Länge von 1,0 mm bis 2,0 mm auf.

Eine weitere vorteilhafte Ausführung ist dadurch gekennzeichnet, dass zu den Profilblöcken solche gehören, welche in jedem Profilblocksegment zumindest einen der Zusatzeinschnitte aufweisen, wobei insbesondere mindestens 30% sämtlicher Profilblöcke des Laufstreifens derart ausgeführt sind. Solche Profilböcke werden besonders gleichmäßig entwässert und gleichmäßig "aufgeweicht". Durch die größere Anzahl von Zusatzeinschnitten steht eine große Anzahl weiterer Griffkanten zur Verfügung.

Die Aufweichung und das Entwässerungsverhalten der Profilblöcke ist ferner besonders gleichmäßig, wenn zu den Profilblöcken solche gehören, an welchen Rillen angrenzen, die zur axialen Richtung unter einem Winkel von 0° bis 60° verlaufen, wobei die Zusatzeinschnitte in Draufsicht parallel sowie insbesondere unter übereinstimmenden Abständen zu diesen Rillen verlaufen.

Gemäß einer weiteren bevorzugten Ausführung gehören zu den Zusatzeinschnitten solche, bei welchen die Supplementwinkel von 90° um bis zu 45°, bevorzugt um bis zu 30°, besonders bevorzugt um bis zu 10°, abweichen.

Vorzugsweise gehören zu den Zusatzeinschnitten solche, bei welchen die Supplementwinkel 90° betragen.

Bevorzugter Weise gehören zu den Profilblöcken solche, welche jeweils zumindest zwei Profilblocksegmente mit jeweils einem der Zusatzeinschnitte aufweisen, wobei die Zusatzeinschnitte innerhalb des jeweiligen Profilblockes in Draufsicht miteinander fluchtend verlaufen.

Eine weitere bevorzugte Ausführung besteht darin, dass in randseitigen Profilblocksegmenten Zusatzeinschnitte vorgesehen sind, welche jeweils einen dem Blockrand des Profilblockes zugewandten, gegenüber dem sonstigen Zusatzeinschnitt seichter ausgeführten Einschnittendabschnitt aufweisen, wobei die Zusatzeinschnitte vorzugsweise in einem Abstand vor dem Blockrand enden.

Eine weitere bevorzugte Ausführung ist dadurch gekennzeichnet, dass die Ausbauchung aus zumindest einem an der einen Einschnittwand des durchquerenden Einschnittes befindlichen Vorsprung, insbesondere einem kuppelförmigen Vorsprung, und zumindest einer an der anderen Einschnittwand des durchquerenden Einschnittes befindlichen Vertiefung, welche mit dem Vorsprung korrespondiert, gebildet ist, wobei die Ausbauchung insbesondere durch zumindest einen im Querschnitt des durchquerenden Einschnittes bogenförmig verlaufenden, mittleren Einschnittabschnitt gebildet ist.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Ansicht auf einen Profilblock eines Laufstreifens eines Fahrzeugluftreifens mit einer ersten Ausführungsvariante der Erfindung,
Fig. 1a eine Draufsicht auf den Profilblock aus Fig. 1,
Fig. 1b einen Schnitt entlang der Linie Ib-Ib der Fig. 1a,
Fig. 2 eine Ansicht auf einen Profilblock eines Laufstreifens eines Fahrzeugluftreifens mit einer zweiten Ausführungsvariante der Erfindung,
Fig. 2a eine Draufsicht auf den Profilblock aus Fig. 2,
Fig. 2b einen Schnitt entlang der Linie IIb-IIb der Fig. 2a und
Fig. 3 eine vergrößerte Ansicht des Details Z₃ der Fig. 1b.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen zum Fahren unter winterlichen Fahrbedingungen oder für den Ganzjahreseinsatz vorgesehen sind.

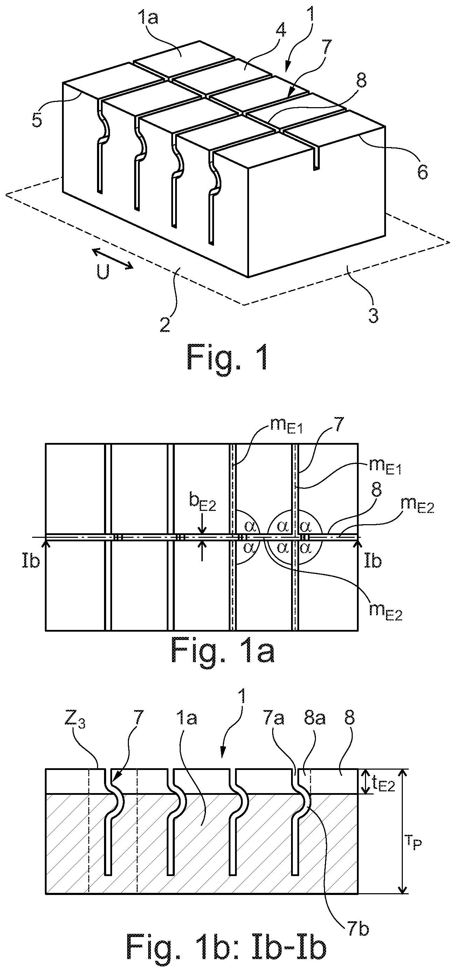

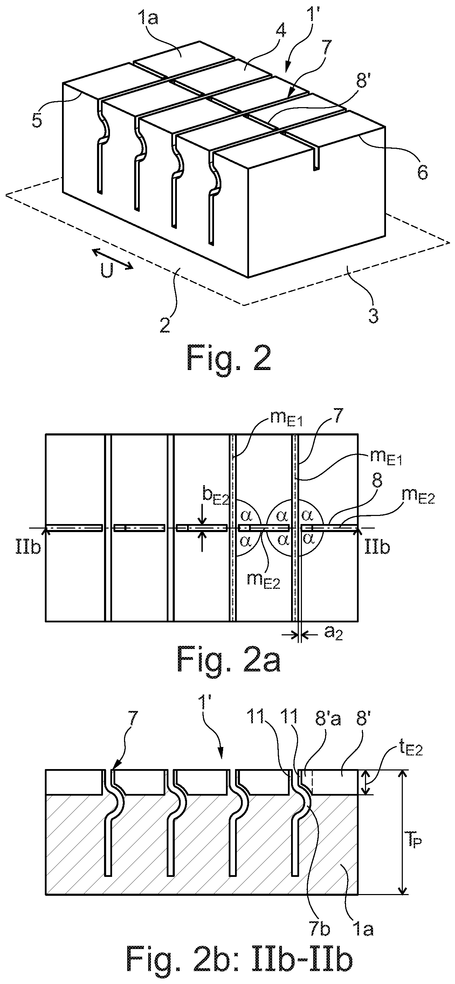

Fig. 1 und Fig. 2 zeigen einen Profilblock 1 (Fig.1), 1' (Fig. 2), welcher jeweils zu einem Laufstreifen eines Fahrzeugluftreifens gehört. Die Umfangsrichtung des Reifens ist jeweils durch einen Doppelpfeil U angedeutet. Der Profilblock 1, 1' ist seitlich durch in Fig. 1 und Fig. 2 lediglich angedeutete Umfangsrillen 2 und durch zwischen den Umfangsrillen 2 verlaufende, ebenfalls lediglich angedeutete Querrillen 3 begrenzt. Der Laufstreifen weist eine Vielzahl von Profilblöcken 1 und/oder 1' auf.

Die Umfangsrillen 2 sowie vorzugsweise auch die Querrillen 3 sind in radialer Richtung jeweils auf die für den jeweiligen Fahrzeugluftreifen vorgesehene Profiltiefe T_{P} (Fig. 1b, Fig. 2b: angedeutet für je eine Querrille 3) ausgeführt, welche üblicherweise 6,5 mm bis 12,0 mm, insbesondere 7,0 mm bis 9,5 mm, beträgt.

Der Profilblock 1, 1' weist in der Laufstreifenperipherie eine Blockaußenfläche 4 auf, welche an den Umfangsrillen 2 durch je eine Blockkante 5 und an den Querrillen 3 durch je eine Blockkante 6 begrenzt ist, und ist mit vier von der Blockaußenfläche 4 ausgehenden, übereinstimmend ausgeführten tieferen Einschnitten 7 und mit von der Blockaußenfläche 4 ausgehenden, gegenüber den tieferen Einschnitten 7 in radialer Richtung seichter ausgeführten Zusatzeinschnitten 8 (Profilblock 1), 8' (Profilblock 1') versehen.

Die tieferen Einschnitte 7 durchqueren den Profilblock 1, 1', verlaufen, in Draufsicht betrachtet (siehe Fig. 1a, Fig. 2a), gerade und in axialer Richtung und somit parallel zu den Blockkanten 6, wobei die tieferen Einschnitte 7 innerhalb des Profilblockes 1, 1' gleichmäßig verteilt angeordnet sind und diesem Profilblocksegmente 1a verleihen. Wie Fig. 1a und Fig. 2a zeigen, weist jeder Einschnitt 7 eine in Draufsicht gerade verlaufende, in seiner Erstreckungsrichtung ausgerichtete Einschnittmittellinie m_{E1} auf, bezüglich welcher der Einschnitt 7 - entsprechend dem erwähnten Verlauf - bei den Ausführungsbeispielen zur axialen Richtung unter einem Winkel von 0° verläuft.

Die weitere Ausgestaltung der tieferen Einschnitte 7 wird nachfolgend anhand eines einzelnen, in einem Profilblock 1 ausgebildeten tieferen Einschnittes 7 erläutert.

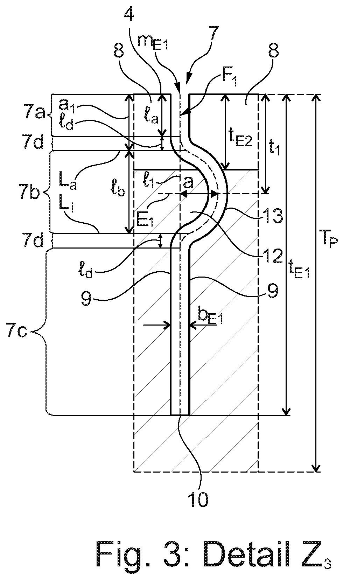

Gemäß Fig. 3 ist der Einschnitt 7 durch zwei einander gegenüberliegende Einschnittwände 9 und einen Einschnittgrund 10 begrenzt, weist eine zwischen den Einschnittwänden 9 ermittelte konstante Breite b_{E1} von 0,4 mm bis 1,2 mm, insbesondere von bis zu 0,8 mm, in radialer Richtung eine maximale Tiefe t_{E1} (Tiefe an der tiefsten Stelle des Einschnittes 7) von 70% bis 100%, insbesondere von höchstens 95%, der Profiltiefe T_{P} und eine von der Einschnittmittellinie m_{E1} ausgehende mittig durch den Einschnitt 7 verlaufende Einschnittmittelfläche F₁ (strichliert angedeutet) auf. Die Einschnittmittelfläche F₁ weist daher übereinstimmende Abstände zu den Einschnittwänden 9 auf. Der Einschnitt 7 weist, im in Draufsicht senkrecht zur Einschnittmittellinie m_{E1} (vergl. Lage der Schnittlinie Ib-Ib in Fig. 1a) verlaufenden Querschnitt betrachtet, einen in radialer Richtung verlaufenden, radial äußeren Einschnittabschnitt 7a, einen bogenförmig verlaufenden, mittleren Einschnittabschnitt 7b und einen in radialer Richtung verlaufenden, radial inneren Einschnittabschnitt 7c auf. Beim gezeigten Ausführungsbeispiel ist zwischen dem mittleren Einschnittabschnitt 7b und dem radial äußeren Einschnittabschnitt 7a sowie zwischen dem mittleren Einschnittabschnitt 7b und dem radial inneren Einschnittabschnitt 7c jeweils ein verrundeter Übergangsabschnitt 7d ausgebildet, welcher, im erwähnten Querschnitt betrachtet, einen stetigen (knickfreien) Übergang zwischen den Einschnittabschnitten 7a, 7b, 7c sicherstellt.

Der radial äußere Einschnittabschnitt 7a weist, im in Draufsicht senkrecht zur Einschnittmittellinie m_{E1} ausgerichteten Querschnitt betrachtet, eine auf die Einschnittmittelfläche F₁ bezogene, in radialer Richtung ermittelte Länge lₐ von vorzugsweise 1,0 mm bis 2,0 mm auf. Die Übergangsabschnitte 7d weisen jeweils eine analog zur Länge lₐ ermittelte Länge l_{d} von vorzugsweise 0,2 mm bis 0,9 mm auf. Der radial innere Einschnittabschnitt 7c verläuft, im in Draufsicht senkrecht zur Einschnittmittellinie m_{E} ausgerichteten Querschnitt betrachtet, in Fortsetzung zum radial äußeren Einschnittabschnitt 7a.

Der bogenförmig verlaufende, mittlere Einschnittabschnitt 7b bildet eine Ausbauchung und erstreckt sich, im in Draufsicht senkrecht zur Einschnittmittellinie m_{E1} ausgerichteten Querschnitt betrachtet, zwischen einer auf die Einschnittmittelfläche F₁ bezogenen, in einer in radialer Richtung ermittelten konstanten Tiefe verlaufenden, radial äußeren Begrenzungslinie Lₐ und einer auf die Einschnittmittelfläche F₁ bezogenen, in einer in radialer Richtung ermittelten konstanten Tiefe verlaufenden, radial inneren Begrenzungslinie Lᵢ. Der mittlere Einschnittabschnitt 7b weist eine zwischen den Begrenzungslinien Lₐ, Lᵢ in radialer Richtung ermittelte Länge l_{b} von insbesondere 1,0 mm bis 3,5 mm, vorzugsweise von 1,5 mm bis 3,0 mm, sowie ferner eine in einer in radialer Richtung ermittelten konstanten Tiefe t₁ verlaufende Symmetrieebene E₁ auf. Im Hinblick auf die Symmetrieebene E₁ bleibt die Reifenkrümmung, also die Krümmung der Reifenkontur unberücksichtigt. Die erwähnten Längen lₐ und l_{d} sind derart gewählt, dass die Begrenzungslinie Lₐ zur Blockaußenfläche 4 in radialer Richtung einen Abstand a₁ von 1,0 mm bis 2,9 mm, insbesondere von mindestens 1,2 mm, aufweist. Auf die konstante Tiefe t₁ wird später noch genauer eingegangen, ihre bevorzugte Größe ist von einer Tiefe t_{E2} abhängig, welche ebenfalls noch erwähnt wird.

In Fig. 3 ist ferner eine die Einschnittmittelfläche F₁ zwischen dem radial äußeren Einschnittabschnitt 7a und dem radial inneren Einschnittabschnitt 7b verbindende gerade Bezugslinie l₁ eingezeichnet. Der mittlere Einschnittabschnitt 7b weist, im erwähnten Querschnitt betrachtet, in der Symmetrieebene E₁ eine zwischen der Bezugslinie l₁ und der Einschnittmittelfläche F₁ ermittelte maximale Auslenkung a von 0,5 mm bis 1,5 mm auf. Der bogenförmig verlaufende mittlere Einschnittabschnitt 7b hat einen an der einen Einschnittwand 9 ausgebildeten, im Querschnitt kreissegmentförmigen Vorsprung 12 und eine an der anderen Einschnittwand 9 ausgebildete, mit dem Vorsprung 12 korrespondierende Vertiefung 13 zur Folge. Die Vertiefung 13 ragt gegenüber dem im Bereich außerhalb des mittleren Einschnittabschnittes 7b vorliegenden Niveau der zugehörigen Einschnittwand 9 in diese Einschnittwand 9 hinein und der Vorsprung 12 ragt gegenüber den im Bereich außerhalb des mittleren Einschnittabschnittes 7b vorliegenden Niveau der zugehörigen Einschnittwand 9 von dieser Einschnittwand 9 ab.

Gemäß Fig. 1 und Fig. 2 ist in jedem Profilblocksegment 1a des Profilblockes 1, 1' einer von den bereits erwähnten Zusatzeinschnitten 8 (Profilblock 1), 8' (Profilblock 1') ausgebildet, wobei die Zusatzeinschnitte 8, 8', in Draufsicht betrachtet, gerade, parallel zu den Blockkanten 5 sowie miteinander fluchtend (Fig. 1a, Fig. 2a) verlaufen und in radialer Richtung in das jeweilige Profilblocksegment 1a hineinragen. Beim gezeigten Ausführungsbeispiel weisen die Zusatzeinschnitte 8, 8' - bezogen auf ihre in Draufsicht in Erstreckungsrichtung ausgerichteten, gerade verlaufende Einschnittmittellinien m_{E2} (Fig. 1a, Fig. 2a) - zu den an Umfangsrillen 2 liegenden Blockkante 5 übereinstimmende Abstände auf.

Wie Fig. 1a und Fig. 2a zeigen, schließen die Einschnittmittellinien m_{E2} der Zusatzeinschnitte 8, 8', in Draufsicht betrachtet, mit der bzw. den Einschnittmittellinie(n) m_{E1} des bzw. der an das jeweilige Profilblocksegment 1a angrenzenden, durchquerenden Einschnitte(s) 7 zwei Supplementwinkel α ein. Die beiden Supplementwinkel α ergänzen sich bekannter Weise auf 180°, wobei jeder Supplementwinkel α von 90° um bis zu 60°, insbesondere um bis zu 45°, bevorzugt um bis zu 30°, besonders bevorzugt um bis zu 10°, abweicht. Bei den gezeigten Ausführungsbeispielen betragen die Supplementwinkel α je 90°.

Jeder Zusatzeinschnitt 8, 8' weist eine konstante Breite b_{E2} von 0,3 mm bis 1,0 mm, insbesondere von 0,4 mm bis 0,6 mm, und in radialer Richtung eine maximale Tiefe t_{E2} (Fig. 1b, Fig. 2b) auf, welche - wie Fig. 3 für Zusatzeinschnitte 8 in einem Profilblock 1 zeigt - derart ausgeführt ist, dass der Zusatzeinschnitt 8, 8' in radialer Richtung zwischen der radial äußeren Begrenzungslinie Lₐ und der radial inneren Begrenzungslinie Lᵢ endet. Die maximale Tiefe t_{E2} beträgt 1,5 mm bis 3,0 mm, wobei die erwähnten Längen lₐ, l_{b}, l_{d} bzw. die Länge l_{b} und der Abstand a₁ auf die jeweilige maximale Tiefe t_{E2} entsprechend abgestimmt sind.

Die bereits erwähnte, konstante Tiefe t₁, in welcher die Symmetrieebene E₁ verläuft, ist vorzugsweise um 0,5 mm bis 1,5 mm größer als die maximale Tiefe t_{E2} der Zusatzeinschnitte 8, 8'.

Gemäß Fig. 1b münden die Zusatzeinschnitte 8 in den mittleren Profilblocksegmenten 1a des Profilblockes 1 in die beiden angrenzenden durchquerenden Einschnitte 7 ein. Die Zusatzeinschnitte 8 in den randseitigen Profilblocksegmenten 1a münden an ihrem einen Ende in den angrenzenden durchquerenden Einschnitt 7 ein und treten an ihrem anderen Ende aus dem Profilbock 1 aus. Jeder Zusatzeinschnitt 8 weist an seinem der Bogenaußenseite des bogenförmig verlaufenden, mittleren Einschnittabschnittes 7b zugewandten Ende, einen gegenüber dem sonstigen Zusatzeinschnitt 8 seichter ausgeführten Einschnittendabschnitt 8a auf, welcher an den radial äußeren Einschnittabschnitt 7a und den mittleren Einschnittabschnitt 7b angrenzt und sich beim Ausführungsbeispiel ausschließlich im Bereich radial außerhalb des mittleren Einschnittabschnittes 7b befindet. Im Bereich außerhalb des Einschnittendabschnittes 8a weist der Zusatzeinschnitt 8 die erwähnte maximale Tiefe t_{E2} auf.

Gemäß Fig. 2b enden die in mittleren Profilblocksegmenten 1a des Profilblockes 1' verlaufenden Zusatzeinschnitte 8' innerhalb der mittleren Profilblocksegmente 1a und weisen zu den durchquerenden Einschnitten 7 an der Laufstreifenperipherie jeweils einen in Verlängerung ihrer Einschnittmittellinie m_{E2} gemessenen Abstand a₂ (Fig. 2a) von 0,1 mm bis 0,3 mm auf. Jeder Zusatzeinschnitt 8' weist an seinem der Bogenaußenseite des bogenförmig verlaufenden, mittleren Einschnittabschnittes 7b zugewandten Ende, einen gegenüber dem sonstigen Zusatzeinschnitt 8' seichter ausgeführten Einschnittendabschnitt 8'a auf, welcher sich im Bereich radial außerhalb des mittleren Einschnittabschnittes 7b befindet. Zwischen jedem Zusatzeinschnitt 8' und dem bzw. den an das jeweilige Profilblocksegment 1a angrenzenden, durchquerenden Einschnitt(en) 7 verbleibt jeweils ein dünner Gummibereich 11, wobei der erwähnte Einschnittendabschnitt 8'a vorzugsweise derart ausgeführt ist, dass der dünne Gummibereich 11 eine konstante Stärke besitzt. Im Bereich außerhalb des Einschnittendabschnittes 8'a weist jeder Zusatzeinschnitt 8' die erwähnte maximale Tiefe t_{E2} auf.

Die Erfindung ist auf die beschriebenen Ausführungsbeispiele nicht beschränkt.

Die Zusatzeinschnitte können auch zwei in radialer Richtung seichter als der sonstige Zusatzeinschnitt ausgeführte Einschnittendabschnitt(e) aufweisen sowie in Draufsicht beispielsweise wellen- oder zick-zack-förmig oder dergleichen verlaufen. Ferner können Zusatzeinschnitte vorgesehen sein, welche mit lokalen Vorsprüngen und korrespondieren Vertiefungen an den Einschnittwänden versehen sind. Die Zusatzeinschnitte sind derart ausgeführt, dass die Stelle der maximalen Tiefe radial innerhalb des Niveaus der radial äußeren Begrenzungslinie der Ausbauchung liegt. Unter der "Stelle der maximalen Tiefe" wird jener Bereich verstanden, in welchem die maximale Tiefe vorliegt.

Die die Profilblöcke durchquerenden Einschnitte verlaufen, in Draufsicht betrachtet und bezogen auf ihre Einschnittmittellinien, zur axialen Richtung unter einem Winkel von 0° bis 50°. Die durchquerenden Einschnitte können in Draufsicht zumindest abschnittsweise wellenförmig verlaufen, wobei die zugrundeliegende Welle insbesondere eine "gerundete" Welle, beispielsweise eine Sinuswelle, eine Rechteckwelle, eine Trapezwelle oder zick-zack-Welle ist.

Sowohl die Zusatzeinschnitte als auch die durchquerenden Einschnitte können in Draufsicht insgesamt gebogen (bogenförmig) verlaufen, sodass sie in Draufsicht bogenförmig (kreisbogenförmig) verlaufende Einschnittmittellinien aufweisen. Es können also beispielsweise in Draufsicht wellenförmig und gleichzeitig insgesamt gebogen verlaufende Zusatzeinschnitte und/oder in Draufsicht wellenförmig und gleichzeitig insgesamt gebogen verlaufende Einschnitte vorgesehen sein. Die angegebenen Winkel und Supplementwinkel sind bei in Draufsicht insgesamt gebogen verlaufenden Zusatzeinschnitten und/oder Einschnitten bezüglich einer die Enden der durchgehend gebogen verlaufenden Einschnittmittellinie verbindenden geraden Linie ermittelt. Ist beispielsweise eine Kombination aus durchquerenden Einschnitten mit in Draufsicht geraden Einschnittmittellinien und Zusatzeinschnitten mit in Draufsicht bogenförmig verlaufenden Einschnittmittellinien vorgesehen, sind die Supplementwinkel zwischen der geraden Einschnittmittellinie des jeweiligen durchquerenden Einschnittes und der die Enden der durchgehend gebogen verlaufenden Einschnittmittellinie des Zusatzeinschnittes verbindenden geraden Linie ermittelt.

Der im Zusammenhang mit den Ausführungsbeispielen erwähnte bogenförmig verlaufende mittlere Einschnittabschnitt bildet eine von der Laufstreifenperipherie beabstandete Ausbauchung. Die Ausbauchung ist zumindest aus einem an der einen Einschnittwand ausgebildeten, lokalen Vorsprung und einer an der anderen Einschnittwand ausgebildeten, dem Vorsprung gegenüberliegenden lokalen Vertiefung gebildet, wobei der Vorsprung und die Vertiefung insbesondere derart miteinander korrespondierende Formen aufweisen, dass die Breite des Einschnittes im Bereich der Ausbauchung konstant ist. Die Ausbauchung muss sich nicht über den gesamten Einschnitt erstrecken, sondern kann derart lokal, etwa als kuppelförmige Wölbung, ausgebildet sein, dass sie sich ausschließlich in einem in Draufsicht über einen Teil des Einschnittes verlaufenden, auf die maximale Tiefe des Einschnittes ausgeführten Einschnittbereich befindet. Die Form der Ausbauchung ist variabel. Ferner können die Einschnitte jeweils mehrere Ausbauchungen aufweisen, welche insbesondere in radialer Richtung aufeinanderfolgen und einen S-förmig verlaufenden mittleren Einschnittabschnitt bilden.

Jede Ausbauchung verläuft zwischen einer radial äußeren Begrenzungslinie und einer radial inneren Begrenzungslinie. Die radial äußere Begrenzungslinie ist auf die Einschnittmittelfläche bezogen und verläuft in einer in radialer Richtung ermittelten konstanten Tiefe durch die radial äußerste Stelle der Ausbauchung. Analoges gilt für die radial innere Begrenzungslinie. Bei entsprechend asymmetrischen Ausbauchungen befinden sich die radial äußerste Stelle der Ausbauchung und die radial innerste Stelle der Ausbauchung nicht in derselben Querschnittebene. In diesem Fall ist die radial äußerste Stelle der Ausbauchung gegenüber der radial innersten Stelle der Ausbauchung in Erstreckungsrichtung des Einschnittes versetzt.

Der Laufstreifen weist Profilblöcke auf, welche jeweils mit zumindest einem durchquerenden Einschnitt mit einer Ausbauchung versehen sind. Vorzugsweise sind zumindest 30% der jeweils vorgesehenen Profilblöcke mit Ausbauchungen aufweisenden, durchquerenden Einschnitten und Zusatzeinschnitten versehen.

### Bezugszeichenliste

- 1, 1': Profilblock
- 1a: Profilblocksegment
- 2: Umfangsrille
- 3: Querrille
- 4: Blockaußenfläche
- 5,6: Blockkante
- 7: Einschnitt
- 7a: radial äußerer Einschnittabschnitt
- 7b: mittlerer Einschnittabschnitt
- 7c: radial innerer Einschnittabschnitt
- 7d: Übergangsabschnitt
- 8, 8': Zusatzeinschnitt
- 8a, 8'a: Einschnittendabschnitt
- 9: Einschnittwand
- 10: Einschnittgrund
- 11: Gummibereich
- 12: Vorsprung
- 13: Vertiefung
- a: maximale Auslenkung
- a₁, a₂: Abstand
- b_{E1}, b_{E2}: Breite
- E₁: Symmetrieebene
- F₁: Einschnittmittelfläche
- Lₐ: radial äußere Begrenzungslinie
- Lᵢ: radial innere Begrenzungslinie
- lₐ, l_{b}, l_{d}: Länge
- l₁: Bezugslinie
- m_{E1}, m_{E2}: Einschnittmittellinie
- U: Doppelpfeil (Umfangsrichtung)
- t₁: Tiefe
- t_{E1}, t_{E2}: maximale Tiefe
- T_{P}: Profiltiefe
- Z₃: Detail
- α: Supplementwinkel

## Patentansprüche

1. Fahrzeugluftreifen mit einem Laufstreifen mit Profilblöcken (1, 1') mit jeweils einer Blockaußenfläche (4) und zumindest einem in Draufsicht unter einem Winkel von 0° bis zu 50° zur axialen Richtung verlaufenden, den jeweiligen Profilblock (1, 1') durchquerenden und in Profilblocksegmente (1a) gliedernden Einschnitt (7) mit einer Breite (b_{E1}) von 0,4 mm bis 1,2 mm, zwei Einschnittwänden (9) und einer zu den Einschnittwänden (9) übereinstimmend beabstandeten Einschnittmittelfläche (F₁), wobei der durchquerende Einschnitt (7) zumindest in einem in Draufsicht über einen Teil des Einschnittes (7) verlaufenden Einschnittbereich auf die maximale Tiefe (t_{E1}) ausgeführt ist, welcher eine von der Blockaußenfläche (4) beabstandete Ausbauchung (7b) aufweist, welche, im entsprechenden Querschnitt senkrecht zur Einschnittmittelfläche (F₁) betrachtet, zwischen einer auf die Einschnittmittelfläche (F₁) bezogenen, in einer in radialer Richtung ermittelten konstanten ersten Tiefe durch die radial äußerste Stelle der Ausbauchung (7b) verlaufenden, radial äußeren Begrenzungslinie (Lₐ) und einer auf die Einschnittmittelfläche (F₁) bezogenen, in einer in radialer Richtung ermittelten konstanten zweiten Tiefe durch die radial innerste Stelle der Ausbauchung (7b) verlaufenden, radial inneren Begrenzungslinie (Lᵢ) ausgebildet ist,
wobei in Profilblocksegmenten (1a) der Profilblöcke (1, 1')jeweils zumindest ein in Draufsicht langgestreckter Zusatzeinschnitt (8, 8') mit einer Breite (b_{E2}) von 0,3 mm bis 1,0 mm und einer maximalen Tiefe (t_{E2}) ausgebildet ist, welcher mit dem durchquerenden Einschnitt (7) von 90° um bis zu 60° abweichende Supplementwinkel (α) einschließt und im Bereich radial außerhalb der Ausbauchung (7b) des durchquerenden Einschnittes (7) einen Einschnittendabschnitt (8a, 8'a) aufweist, wobei die Stelle der maximalen Tiefe (t_{E2}) des Zusatzeinschnittes (8, 8') radial innerhalb des Niveaus der radial äußeren Begrenzungslinie (Lₐ) der Ausbauchung (7b) liegt,
**dadurch gekennzeichnet,**
**dass** der durchquerende Einschnitt (7) eine maximale Tiefe (t_{E1}) von 70% bis 100% der Profiltiefe aufweist, wobei die Stelle der maximalen Tiefe (t_{E2}) des Zusatzeinschnittes (8, 8') radial außerhalb des Niveaus der radial inneren Begrenzungslinie (Lᵢ) der Ausbauchung (7b) des durchquerenden Einschnittes (7) liegt.

2. Fahrzeugluftreifen nach Anspruch 1, **dadurch gekennzeichnet, dass** die maximale Tiefe (t_{E2}) des Zusatzeinschnittes (8) 1,5 mm bis 3,0 mm beträgt.

3. Fahrzeugluftreifen nach Anspruch 1 oder 2, **dadurch gekennzeichnet, dass** die radial äußere Begrenzungslinie (Lₐ) der Ausbauchung (7b) des durchquerenden Einschnittes (7) zur Blockaußenfläche (4) in radialer Richtung einen Abstand (a₁) von 1,0 mm bis 2,9 mm, insbesondere von mindestens 1,2 mm, aufweist.

4. Fahrzeugluftreifen nach einem der Ansprüche 1 bis 3, **dadurch gekennzeichnet, dass** die Ausbauchung (7b) des durchquerenden Einschnittes (7) eine in einer radialer Richtung ermittelten konstanten Tiefe (t₁) verlaufende Symmetrieebene (E₁) aufweist, wobei die Stelle der maximalen Tiefe (t_{E2}) des Zusatzeinschnittes (8, 8') radial außerhalb der Symmetrieebene (E₁) liegt und wobei die konstante Tiefe (t₁), in welcher die Symmetrieebene (E₁) verläuft, vorzugsweise 0,5 mm bis 1,5 mm größer ist als die maximale Tiefe (t_{E2}) des Zusatzeinschnittes (8, 8').

5. Fahrzeugluftreifen nach einem der Ansprüche 1 bis 4, **dadurch gekennzeichnet, dass** der Zusatzeinschnitt (8) in Draufsicht gerade verläuft.

6. Fahrzeugluftreifen nach einem der Ansprüche 1 bis 5, **dadurch gekennzeichnet, dass** der Zusatzeinschnitt (8) in den durchquerenden Einschnitt (7) einmündet oder vor diesem in einem in Draufsicht in Verlängerung der Einschnittmittellinie (m_{E2}) ermittelten Abstand (a₂) von 0,1 mm bis 0,3 mm endet.

7. Fahrzeugluftreifen nach einem der Ansprüche 1 bis 6, **dadurch gekennzeichnet, dass** der durchquerende Einschnitt (7) einen zwischen der Ausbauchung (7b) und der Blockaußenfläche (4) in radialer Richtung verlaufenden, radial äußeren Einschnittabschnitt (7a) mit einer auf die Einschnittmittelfläche (F₁) bezogenen in radialer Richtung ermittelten Länge (lₐ) von 1,0 mm bis 2,0 mm aufweist.

8. Fahrzeugluftreifen nach einem der Ansprüche 1 bis 7, **dadurch gekennzeichnet, dass** zu den Profilblöcken (1, 1') solche gehören, welche in jedem Profilblocksegment (1a) zumindest einen der Zusatzeinschnitte (8, 8') aufweisen, wobei insbesondere mindestens 30% sämtlicher Profilblöcke (1, 1') des Laufstreifens derart ausgeführt sind.

9. Fahrzeugluftreifen nach einem der Ansprüche 1 bis 8, **dadurch gekennzeichnet, dass** zu den Profilblöcken (1, 1') solche gehören, an welchen Rillen angrenzen, die zur axialen Richtung unter einem Winkel von 0° bis 60° verlaufen, wobei die Zusatzeinschnitte (8, 8') in Draufsicht parallel sowie insbesondere unter übereinstimmenden Abständen zu diesen Rillen verlaufen.

10. Fahrzeugluftreifen nach einem der Ansprüche 1 bis 9, **dadurch gekennzeichnet, dass** zu den Zusatzeinschnitten (8, 8') solche gehören, bei welchen die Supplementwinkel (α) von 90° um bis zu 45°, bevorzugt um bis zu 30°, besonders bevorzugt um bis zu 10°, abweichen.

11. Fahrzeugluftreifen nach einem der Ansprüche 1 bis 10, **dadurch gekennzeichnet, dass** zu den Zusatzeinschnitten (8, 8') solche gehören, bei welchen die Supplementwinkel (α) 90° betragen.

12. Fahrzeugluftreifen nach einem der Ansprüche 1 bis 11, **dadurch gekennzeichnet, dass** zu den Profilblöcken (1, 1') solche gehören, welche jeweils zumindest zwei Profilblocksegmente (1a) mit jeweils einem der Zusatzeinschnitte (8, 8') aufweisen, wobei die Zusatzeinschnitte (8, 8') innerhalb des jeweiligen Profilblockes (1, 1') in Draufsicht miteinander fluchtend verlaufen.

13. Fahrzeugluftreifen nach einem der Ansprüche 1 bis 12, **dadurch gekennzeichnet, dass** in randseitigen Profilblocksegmenten (1a) Zusatzeinschnitte (8, 8') vorgesehen sind, welche jeweils einen dem Blockrand des Profilblockes (1, 1') zugewandten, gegenüber dem sonstigen Zusatzeinschnitt (8, 8') seichter ausgeführten Einschnittendabschnitt aufweisen, wobei die Zusatzeinschnitte (8, 8') vorzugsweise in einem Abstand vor dem Blockrand enden.

14. Fahrzeugluftreifen nach einem der Ansprüche 1 bis 13, **dadurch gekennzeichnet, dass** die Ausbauchung (7b) aus zumindest einem an der einen Einschnittwand (9) des durchquerenden Einschnittes (7) befindlichen Vorsprung (12), insbesondere einem kuppelförmigen Vorsprung, und zumindest einer an der anderen Einschnittwand (9) des durchquerenden Einschnittes (7) befindlichen Vertiefung (13), welche mit dem Vorsprung (12) korrespondiert, gebildet ist, wobei die Ausbauchung (7b) insbesondere durch zumindest einen im Querschnitt des durchquerenden Einschnittes (7) bogenförmig verlaufenden, mittleren Einschnittabschnitt (7b) gebildet ist.

## Claims

1. Pneumatic vehicle tyre having a tread with profile blocks (1, 1') which each have a block outer surface (4) and have at least one sipe (7) which, in plan view, extends at an angle of 0° to 50° to the axial direction, crosses through the respective profile block (1, 1') and divides the latter into profile-block segments (1a), said at least one sipe having a width (b_{E1}) of 0.4 mm to 1.2 mm, having two sipe walls (9) and having a sipe central surface (F₁) which is spaced apart correspondingly from the sipe walls (9), wherein the through-crossing sipe (7), at least in a sipe region extending over a part of the sipe (7) in plan view, is formed to the maximum depth (t_{E1}) and has a convexity (7b) which is spaced apart from the block outer surface (4) and which, when viewed in the corresponding cross section perpendicular to the sipe central surface (F₁), is formed between a radially outer delimitation line (Lₐ) based on the sipe central surface (F₁) that extends at a constant first depth, as determined in a radial direction, through the radially outermost point of the convexity (7b) and a radially inner delimitation line (Lᵢ) based on the sipe central surface (F₁) that extends at a constant second depth, as determined in the radial direction, through the radially innermost point of the convexity (7b),
wherein, in profile-block segments (1a) of the profile blocks (1, 1'), there is formed in each case at least one additional sipe (8, 8') which is elongate in plan view and has a width (b_{E2}) of 0.3 mm to 1.0 mm and has a maximum depth (t_{E2}), said at least one additional sipe including with the through-crossing sipe (7) supplementary angles (α) which deviate from 90° by up to 60° and having a sipe end portion (8a, 8'a) in the region radially outside the convexity (7b) of the through-crossing sipe (7), wherein the point of maximum depth (t_{E2}) of the additional sipe (8, 8') is situated radially within the level of the radially outer delimitation line (Lₐ) of the convexity (7b),
**characterized**
**in that** the through-crossing sipe (7) has a maximum depth (t_{E1}) of 70% to 100% of the profile depth, wherein the point of maximum depth (t_{E2}) of the additional sipe (8, 8') is situated radially outside the level of the radially inner delimitation line (Lᵢ) of the convexity (7b) of the through-crossing sipe (7).

2. Pneumatic vehicle tyre according to Claim 1, **characterized in that** the maximum depth (t_{E2}) of the additional sipe (8) is 1.5 mm to 3.0 mm.

3. Pneumatic vehicle tyre according to Claim 1 to 2, **characterized in that** the radially outer delimitation line (Lₐ) of the convexity (7b) of the through-crossing sipe (7) is at a distance (a₁) of 1.0 mm to 2.9 mm, in particular of at least 1.2 mm, from the block outer surface (4) in the radial direction.

4. Pneumatic vehicle tyre according to one of Claims 1 to 3, **characterized in that** the convexity (7b) of the through-crossing sipe (7) has a plane of symmetry (E₁) which extends at a constant depth (t₁), as determined in a radial direction, wherein the point of maximum depth (t_{E2}) of the additional sipe (8, 8') is situated radially outside the plane of symmetry (E₁), and wherein the constant depth (t₁) at which the plane of symmetry (E₁) extends is preferably 0.5 mm to 1.5 mm greater than the maximum depth (t_{E2}) of the additional sipe (8, 8').

5. Pneumatic vehicle tyre according to one of Claims 1 to 4, **characterized in that** the additional sipe (8) extends rectilinearly in plan view.

6. Pneumatic vehicle tyre according to one of Claims 1 to 5, **characterized in that** the additional sipe (8) opens out into the through-crossing sipe (7) or ends at a distance (a₂) of 0.1 mm to 0.3 mm in front of the latter, as determined in an extension of the sipe central line (m_{E2}) in plan view.

7. Pneumatic vehicle tyre according to one of Claims 1 to 6, **characterized in that** the through-crossing sipe (7) has a radially outer sipe portion (7a) which extends in the radial direction between the convexity (7b) and the block outer surface (4) and which has a length (lₐ) based on the sipe central surface (F₁) of 1.0 mm to 2.0 mm, as determined in the radial direction.

8. Pneumatic vehicle tyre according to one of Claims 1 to 7, **characterized in that** the profile blocks (1, 1') include those which have in each profile-block segment (1a) at least one of the additional sipes (8, 8'), wherein in particular at least 30% of all of the profile blocks (1, 1') of the tread are designed in this way.

9. Pneumatic vehicle tyre according to one of Claims 1 to 8, **characterized in that** the profile blocks (1, 1') include those which are adjoined by channels extending at an angle of 0° to 60° to the axial direction, wherein, in plan view, the additional sipes (8, 8') extend parallel to and in particular at corresponding distances from said channels.

10. Pneumatic vehicle tyre according to one of Claims 1 to 9, **characterized in that** the additional sipes (8, 8') include those for which the supplementary angles (α) deviate from 90° by up to 45°, preferably by up to 30°, particularly preferably by up to 10°.

11. Pneumatic vehicle tyre according to one of Claims 1 to 10, **characterized in that** the additional sipes (8, 8') include those for which the supplementary angles (α) are 90°.

12. Pneumatic vehicle tyre according to one of Claims 1 to 11, **characterized in that** the profile blocks (1, 1') include those which have in each case at least two profile-block segments (1a) with in each case one of the additional sipes (8, 8'), wherein, in plan view, the additional sipes (8, 8') within the respective profile block (1, 1') extend in a manner aligned with one another.

13. Pneumatic vehicle tyre according to one of Claims 1 to 12, **characterized in that** additional sipes (8, 8') are provided in peripheral profile block segments (1a) and each have a sipe end portion which faces towards the block periphery of the profile block (1, 1') and which is shallower than the rest of the additional sipe (8, 8'), wherein the additional sipes (8, 8') preferably end at a distance in front of the block periphery.

14. Pneumatic vehicle tyre according to one of Claims 1 to 13, **characterized in that** the convexity (7b) is formed from at least one projection (12) situated on one sipe wall (9) of the through-crossing sipe (7), in particular a dome-shaped projection, and at least one depression (13) situated on the other sipe wall (9) of the through-crossing sipe (7) and corresponding to the projection (12), wherein the convexity (7b) is formed in particular by at least one middle sipe portion (7b) which extends in an arcuate manner in the cross section of the through-crossing sipe (7).

## Revendications

1. Pneumatique de véhicule avec une bande de roulement avec des blocs profilés (1, 1') avec respectivement une surface extérieure (4) de bloc et au moins une entaille (7) se divisant en segments (1a) de bloc profilé, traversant le bloc profilé (1, 1') respectif et s'étendant dans une vue de dessus selon un angle de 0° à 50° par rapport à la direction axiale et avec une largeur (bei) de 0,4 mm à 1,2 mm, deux parois (9) d'entaille et une surface centrale (F₁) d'entaille espacée de manière concordante par rapport aux parois (9) d'entaille, l'entaille traversante (7) étant réalisée au moins dans une zone d'entaille s'étendant dans une vue de dessus sur une partie de l'entaille (7) sur la profondeur maximale (t_{E1}), laquelle comporte un bombement convexe (7b) espacé de la surface extérieure (4) de bloc, lequel, vu dans la section transversale correspondante perpendiculairement à la surface centrale (F₁) d'entaille, est réalisé entre une ligne de délimitation radialement extérieure (Lₐ) s'étendant à travers l'emplacement le plus extérieur radialement du bombement convexe (7b) à une première profondeur constante déterminée dans la direction radiale, se rapportant à la surface centrale (F₁) d'entaille et une ligne de délimitation radialement intérieure (Lᵢ) s'étendant à travers l'emplacement le plus intérieur radialement du bombement convexe (7b) à une deuxième profondeur constante déterminée dans la direction radiale, se rapportant à la surface centrale (F₁) d'entaille,
au moins une entaille supplémentaire (8, 8') étirée en longueur dans une vue de dessus avec une largeur (b_{E2}) de 0,3 mm à 1,0 mm et une profondeur maximale (t_{E2}) étant respectivement réalisée dans des segments (1a) de bloc profilé des blocs profilés (1, 1'), laquelle forme avec l'entaille traversante (7) des angles supplémentaires (α) autres s'écartant de 90° à hauteur de 60° et comporte une section d'extrémité (8a, 8'a) d'entaille dans la zone radialement à l'extérieur du bombement convexe (7b) de l'entaille traversante (7), l'emplacement de la profondeur maximale (t_{E2}) de l'entaille supplémentaire (8, 8') se situant radialement dans le niveau de la ligne de délimitation la plus extérieure radialement (Lₐ) du bombement convexe (7b),
**caractérisé en ce**
**que** l'entaille traversante (7) présente une profondeur maximale (t_{E1}) de 70 % à 100 % de la profondeur de profilé, l'emplacement de la profondeur maximale (t_{E2}) de l'entaille supplémentaire (8, 8') se situant radialement à l'extérieur du niveau de la ligne de délimitation intérieure radialement (Lᵢ) du bombement convexe (7b) de l'entaille traversante (7).

2. Pneumatique de véhicule selon la revendication 1, **caractérisé en ce que** la profondeur maximale (t_{E2}) de l'entaille supplémentaire (8) va de 1,5 mm à 3,0 mm.

3. Pneumatique selon la revendication 1 ou 2, **caractérisé en ce que** la ligne de délimitation radialement extérieure (Lₐ) du bombement convexe (7b) de l'entaille traversante (7) par rapport à la surface extérieure (4) de profilé présente dans la direction radiale une distance (a₁) de 1,0 mm à 2,9 mm, en particulier d'au moins 1,2 mm.

4. Pneumatique de véhicule selon l'une des revendications 1 à 3, **caractérisé en ce que** le bombement convexe (7b) de l'entaille traversante (7) présente un plan de symétrie (E₁) s'étendant à une profondeur constante (t₁) déterminée dans une direction radiale, l'emplacement de la profondeur maximale (t_{E2}) de l'entaille supplémentaire (8, 8') étant situé radialement à l'extérieur du plan de symétrie (E₁) et la profondeur constante (t₁), à laquelle s'étend le plan de symétrie (E₁), étant supérieure de préférence de 0,5 mm à 1,5 mm à la profondeur maximale (t_{E2}) de l'entaille supplémentaire (8, 8').

5. Pneumatique de véhicule selon l'une des revendications 1 à 4, **caractérisé en ce que** l'entaille supplémentaire (8) s'étend de manière rectiligne dans une vue de dessus.

6. Pneumatique de véhicule selon l'une des revendications 1 à 5, **caractérisé en ce que** l'entaille supplémentaire (8) débouche dans l'entaille traversante (7) ou se termine devant celle-ci, à une distance (a₂) de 0,1 mm à 0,3 mm déterminée dans le prolongement de la ligne médiane (m_{E2}) d'entaille dans une vue de dessus.

7. Pneumatique de véhicule selon l'une des revendications 1 à 6, **caractérisé en ce que** l'entaille traversante (7) comporte une section d'entaille radialement extérieure (7a) s'étendant dans la direction radiale entre le bombement convexe (7b) et la surface extérieure (4) de bloc avec une longueur (lₐ) de 1,0 mm à 2,0 mm déterminée dans la direction radiale par rapport à la surface centrale (F₁) d'entaille.

8. Pneumatique de véhicule selon l'une des revendications 1 à 7, **caractérisé en ce que** font partie des blocs profilés (1, 1') ces blocs, qui comportent au moins une des entailles supplémentaires (8, 8') dans chaque segment (1a) de bloc profilé, en particulier au moins 30 % de la totalité des blocs profilés (1, 1') de la bande de roulement étant réalisés de cette manière.

9. Pneumatique de véhicule selon l'une des revendications 1 à 8, **caractérisé en ce que** font partie des blocs profilés (1, 1') ces blocs que des rainures jouxtent, lesquelles s'étendent par rapport à la direction axiale selon un angle de 0° à 60°, les entailles supplémentaires (8, 8') s'étendant par rapport auxdites rainures dans une vue de dessus parallèlement et en particulier à des distances concordantes.

10. Pneumatique de véhicule selon l'une des revendications 1 à 9, **caractérisé en ce que** font partie des entailles supplémentaires (8, 8') ces entailles, pour lesquelles les angles supplémentaires (α) s'écartent à hauteur de 45°, de manière préférée à hauteur de 30°, de manière particulièrement préférée à hauteur de 10°, de 90°.

11. Pneumatique de véhicule selon l'une des revendications 1 à 10, **caractérisé en ce que** font parties des entailles supplémentaires (8, 8') ces entailles pour lesquelles les angles supplémentaires (α) sont de 90°.

12. Pneumatique de véhicule selon l'une des revendications 1 à 11, **caractérisé en ce que** font partie des blocs profilés (1, 1') ces blocs qui comportent chacun au moins deux segments (1a) de bloc profilé avec respectivement une des entailles supplémentaires (8, 8'), les entailles supplémentaires (8, 8') s'étendant à l'intérieur du bloc profilé (1, 1') respectif de manière alignée les unes par rapport aux autres dans une vue de dessus.

13. Pneumatique de véhicule selon l'une des revendications 1 à 12, **caractérisé en ce que** sont prévues dans des segments (1a) de bloc profilé côté bord des entailles supplémentaires (8, 8'), qui comportent respectivement une section d'extrémité d'entaille réalisée avec une plus faible profondeur par rapport à l'autre entaille supplémentaire (8, 8'), tournée vers le bord de bloc du bloc profilé (1, 1'), les entailles supplémentaires (8, 8') se terminant devant le bord de bloc de préférence à une distance donnée.

14. Pneumatique de véhicule selon l'une des revendications 1 à 13, **caractérisé en ce que** le bombement convexe (7b) est formé à partir d'au moins une partie faisant saillie (12) se trouvant sur une paroi (9) d'entaille de l'entaille traversante (7), en particulier à partir d'une partie faisant saillie en forme de dôme, et d'au moins un renfoncement (13) se trouvant sur l'autre paroi (9) d'entaille de l'entaille traversante (7), lequel correspond à la partie faisant saillie (12), le bombement convexe (7b) étant formé en particulier par au moins une section centrale (7b) d'entaille s'étendant en forme d'arc dans la section transversale de l'entaille traversante (7).
